# EUROPEAN PATENT APPLICATION

(11) **EP 4 397 841 A2**
(43) Date of publication of application: **10.07.2024**
(21) Application number: 24178070.9
(22) Date of filing: 27.08.2014
(51) Int. Cl.: F01D 5/18

(54) **GAS TURBINE ENGINE AIRFOIL TURBULATOR FOR AIRFOIL CREEP RESISTANCE**

(30) Priority: 05.09.2013 US 201361873942 P
(62) Divisional of application: 14862682.3
(71) Applicant: RTX Corporation, Farmington, CT 06032 (US)
(72) Inventor: THISTLE, Charles, New Haven, 06511 (US); THORNTON, Lane, Tolland, 06084 (US)
(74) Representative: Dehns

(57) **Abstract**

A gas turbine engine component (64) includes spaced apart walls (86, 88) that extend in a load direction and provide a cooling passage (90). The cooling passage provides a tortuous passage having a generally straight portion (105) that extends in the load direction and a bend (106) transverse to the load direction. Elongated turbulators (92) protrude from at least one of the walls and extend substantially in the load direction. The elongated turbulators are substantially within the generally straight portion.

## Description

### CROSS-REFERENCE TO RELATED APPLICATIONS

This application claims priority to United States Provisional Application No. 61/873,942, which was filed on September 5, 2013.

### BACKGROUND

This disclosure relates to a gas turbine engine component having a cooling passage, such as an airfoil. More particularly, the disclosure relates to a cooling arrangement within a cooling passage of the airfoil.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

Creep is a physical deformation mechanism that affects materials that are subjected to a combination of high temperature and stress, in particular, in gas turbine engine components such as turbine blades. Over time, turbine inlet temperatures and high rotor speeds are being driven up to increase efficiencies. Consequently, the burdens placed upon the materials in the engine's high temperature core are ever increasing. Creep is a particularly troublesome degradation mechanism that often limits the durability of hot turbine airfoil blades. In an attempt to mitigate the threat of creep, dedicated cooling air is often extracted from the compressor and used to cool the more creep prone regions of an airfoil.

Creep can be especially problematic when the geometry on which it works cannot constrain the continued deformation of material. This acceleration of material deformation often leads to creep rupture in the complex geometries of turbine blades. As creep is due to a combination of high temperature and high stress, common practices to mitigate it include delivering siphoned off cooling air and/or adding structure to the to the effected region to increase stiffness so as to minimize the stress. These design changes come as a cost. Extra cooling air causes loss of engine efficiency, and altering the stiffness characteristics of an airfoil can often invite other degradation mechanisms, such as low or high cycle fatigue.

### SUMMARY

In one exemplary embodiment, a gas turbine engine component includes spaced apart walls that extend in a load direction and provide a cooling passage. The cooling passage provides a tortuous passage having a generally straight portion that extends in the load direction and a bend transverse to the load direction. Elongated turbulators protrude from at least one of the walls and extend substantially in the load direction. The elongated turbulators are substantially within the generally straight portion.

In a further embodiment of the above, the component is a turbine blade. The spaced apart walls provide an airfoil. The load direction is a radial direction.

In a further embodiment of any of the above, the elongated turbulators are arranged on both walls.

In a further embodiment of any of the above, the walls are spaced apart a width, and the elongated turbulators have a height less than the width.

In a further embodiment of any of the above, the elongated turbulators extend in the radial direction a length and include a width with a ratio of the length to the width being at least 4:1.

In a further embodiment of any of the above, the airfoil includes a trailing edge portion. The elongated turbulators are arranged in the trailing edge portion.

In a further embodiment of any of the above, the elongated turbulators are oriented at an angle relative to the radial direction within +/- 15°.

In another exemplary embodiment, a gas turbine engine component includes spaced apart walls that extend in a load direction and provide a cooling passage. A cluster of elongated turbulators protrude from at least one wall and extend substantially in the load direction. The turbulators are parallel to one another.

In a further embodiment of the above, the component is a turbine blade. The spaced apart walls provide an airfoil. The load direction is a radial direction.

In a further embodiment of any of the above, the elongated turbulators are arrange on both walls.

In a further embodiment of any of the above, the walls are spaced apart a width. The elongated turbulators have a height less than the width.

In a further embodiment of any of the above, the elongated turbulators extend in the radial direction a length and include a width. A ratio of the length to the width being at least 4:1.

In a further embodiment of any of the above, the airfoil includes a trailing edge portion. The elongated turbulators are arranged in the trailing edge portion.

In a further embodiment of any of the above, the elongated turbulators are oriented at an angle relative to the radial direction within +/- 15°.

In another exemplary embodiment, a gas turbine engine component includes spaced apart walls that extend in a load direction and provide a cooling passage. Elongated turbulators protrude from at least one wall and extend substantially in the load direction. A secondary turbulator is arranged transverse to and intersecting the elongated turbulators.

In a further embodiment of the above, the component is a turbine blade. The spaced apart walls provide an airfoil. The load direction is a radial direction.

In a further embodiment of any of the above, the walls are spaced apart a width. The elongated turbulators have a height less than the width.

In a further embodiment of any of the above, the elongated turbulators extend in the radial direction a length and include a width. A ratio of the length to the width being at least 4:1.

In a further embodiment of any of the above, the airfoil includes a trailing edge portion. The elongated turbulators are arranged in the trailing edge portion.

In a further embodiment of any of the above, the elongated turbulators are oriented at an angle relative to the radial direction within +/- 15°.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2A is a perspective view of the airfoil having the disclosed cooling passage.
Figure 2B is a plan view of the airfoil illustrating directional references.
Figure 3 is a schematic view of one example cooling passage including three cooling passageways.
Figure 4 is a cross-sectional view of the airfoil taken along line 4-4 of Figure 2A.
Figure 5A is an enlarged view of a leading edge portion of the airfoil shown in Figure 4.
Figure 5B is an enlarged view of a trailing edge portion of the airfoil shown in Figure 4.
Figure 6A is an elevational view of an example turbulator arrangement.
Figure 6B is an end view of the turbulator arrangement shown in Figure 6A.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

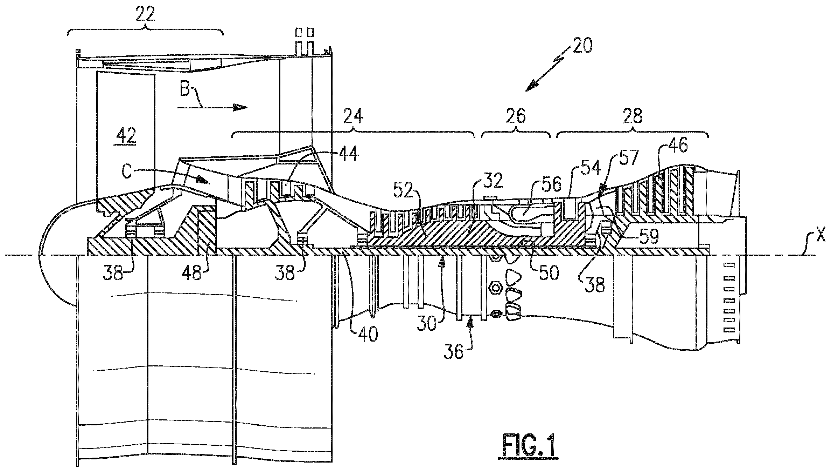

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 supports one or more bearing systems 38 in the turbine section 28. The inner shaft 40 and the outer shaft 50 are concentric and rotate via bearing systems 38 about the engine central longitudinal axis X, which is collinear with their longitudinal axes.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example a high-bypass geared aircraft engine. In a further example, the engine 20 bypass ratio is greater than about six (6), with an example embodiment being greater than ten (10). The example speed reduction device is a geared architecture 48 however other speed reducing devices such as fluid or electromechanical devices are also within the contemplation of this disclosure. The example geared architecture 48 is an epicyclic gear train, such as a star gear system or other gear system, with a gear reduction ratio of greater than about 2.3, or more specifically, a ratio of from about 2.2 to about 4.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as bucket cruise Thrust Specific Fuel Consumption ("TSFC"). TSFC is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(T_{ambient} °R) / 518.7 °R) ^{0.5}]. The "low corrected fan tip speed" as disclosed herein according to one non-limiting embodiment is less than about 1150 ft / second.

The disclosed cooling passage may be used in various gas turbine engine components, such as those subject to creep due to high temperature and stress. For exemplary purposes, a turbine blade 64 is described. It should be understood that the cooling passage may also be used in vanes, blade outer air seals, and turbine platforms, combustor liners, and exhaust liners, for example. Turbine blades are subject to particularly high stress due to high centrifugal loads in the radial direction.

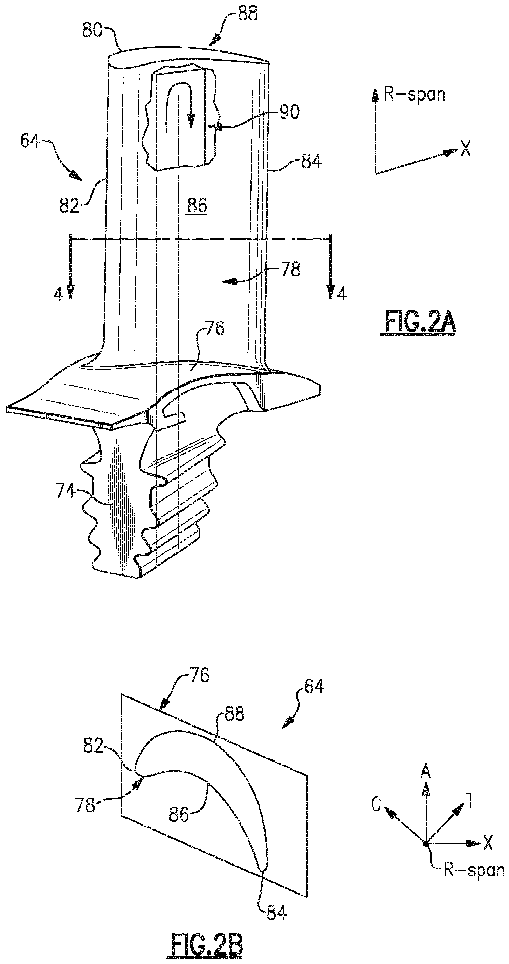

Referring to Figures 2A and 2B, a root 74 of each turbine blade 64 is mounted to the rotor disk. The turbine blade 64 includes a platform 76, which provides the inner flow path, supported by the root 74. An airfoil 78 extends in a radial direction R from the platform 76 to a tip 80. It should be understood that the turbine blades may be integrally formed with the rotor such that the roots are eliminated. In such a configuration, the platform is provided by the outer diameter of the rotor. The airfoil 78 provides leading and trailing edges 82, 84. The tip 80 is arranged adjacent to a blade outer air seal (not shown).

The airfoil 78 of Figure 2B somewhat schematically illustrates an exterior airfoil surface extending in a chord-wise direction C from a leading edge 82 to a trailing edge 84. The airfoil 78 is provided between pressure (typically concave) and suction (typically convex) wall 86, 88 in an airfoil thickness direction T, which is generally perpendicular to the chord-wise direction C. Multiple turbine blades 64 are arranged circumferentially in a circumferential direction A.

The airfoil 78 includes a cooling passage 90 provided between the pressure and suction walls 86, 88. The exterior airfoil surface may include multiple film cooling holes (not shown) in fluid communication with the cooling passage 90.

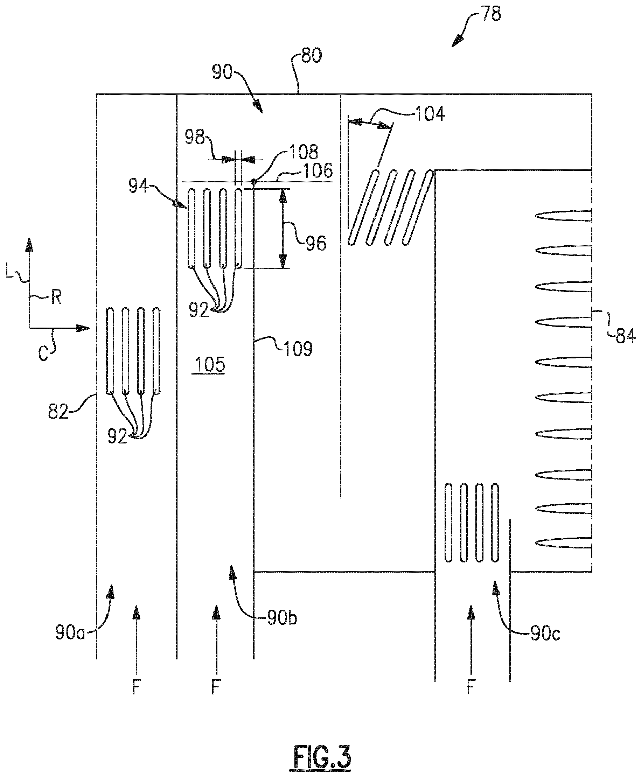

In one example, the cooling passage 90 is provided by multiple cooling passageways, such as cooling passageways 90A, 90B, 90C, as shown in Figure 3. The first cooling passageway 90A is provided near the leading edge 92 of the airfoil 78. The second cooling passageway 90B is a serpentine cooling passage that is arranged at an intermediate portion of the airfoil 78 and extends to the trailing edge 84 near the tip 80. The third passageway 90C is arranged in the trailing edge portion of the airfoil 78. A cooling flow F is provided to each of the first, second and third passageways 90A, 90B, 90C, typically from the root 74, as schematically shown in Figure 2A. The cooling passage 90 shown in Figure 3 is exemplary only and may be configured other than depicted based upon the airfoil application.

Referring to Figures 3-5B, elongated turbulators 92 are arranged within the cooling passage 90 at various locations and may be grouped into clusters 94 of generally parallel elongated turbulators. Turbulators, sometimes called trip strips, are used to disrupt the regular flow of cooling air on the internal passages of an airfoil, affecting an increase of convection on the intended surfaces. The elongated turbulators 92 extend substantially in a load direction L, which typically corresponds to the radial direction R for turbine blades.

The disclosed elongated turbulators minimize the changes to the stiffness of the airfoil. The turbulators serve as a relatively cool, load bearing feature on the inside of the airfoil. In the highly creep afflicted regions of an airfoil, the inclusion of radially oriented turbulators can help decelerate the progression of the deformation. By orienting the turbulators radially, some of the load, the direction of which is largely radial in a typical airfoil, can be carried along the turbulators across the creep afflicted region, reducing the amount of stress in the region and therefore slowing the progression of creep damage. The turbulators enhance convection from the airflow to the hot surface and work to cool the creep-afflicted region.

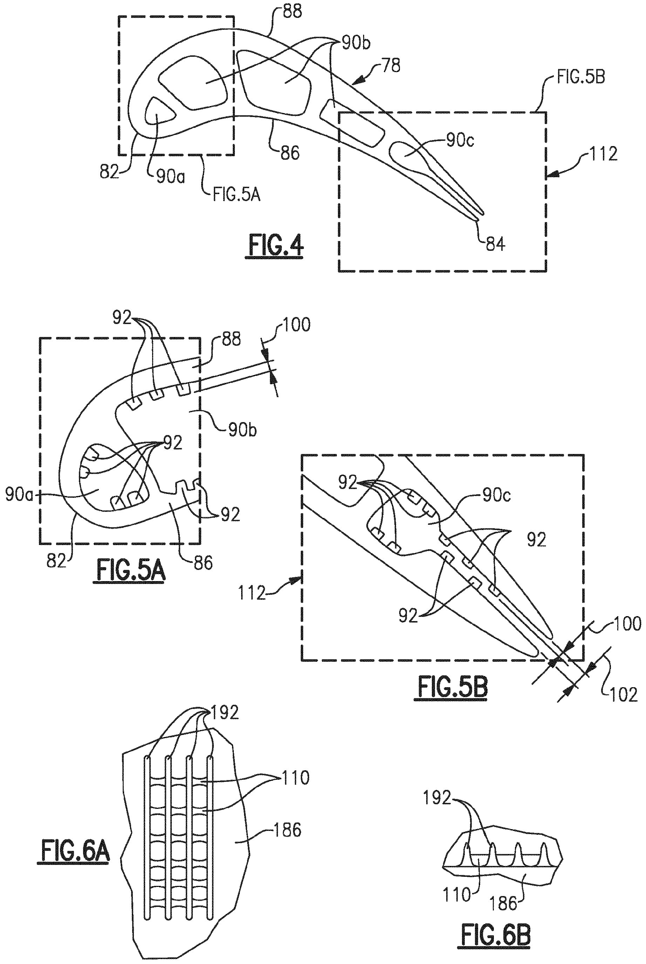

The elongated turbulators 92 are discrete, generally linear structures and have an aspect ratio provided by a length 96 that is substantially greater than a width 98. The aspect ratio is at least 4:1 in one example. The elongated turbulators 92 extend from a wall, for example, the pressure and suction side walls 86, 88, a height 100 that is less than a width 102 of the cooling passage, as shown in Figures 5A and 5B.

One or more turbulators can be provided on only one wall of the airfoil or opposite walls. If they are designed into opposite walls, they may have similar or dissimilar patterns. The turbulators can vary in height along their length. They can be cast with the airfoil or joined to it after casting. They may also be manufactured using an additive technique.

The elongated turbulators 92 extend substantially in the same direction as the load direction L, for example, at an angle 104 of up to +/- 15° relative to the load direction L. In cooling passages having tortuous passageway, such as the second cooling passageway 90B, the elongated turbulators 92 are substantially within a straight portion 105 and outside of a bend 106. The bend 106 is defined as the portion of the passageway perpendicular to an end 108 of a partition wall 109 providing the generally straight portion 105. The term "substantially within" means that greater than 50% of the elongated turbulators 92 are within the substantially straight portion 105.

It may be desirable to arrange the elongated turbulators 92 in a trailing edge portion 112, which is provided on the aft third of the airfoil in the chord-wise direction C. The trailing edge portion 112 may be particularly susceptible to stress since the airfoil is much thinner in this area.

In the example shown in Figures 6A and 6B, the elongated turbulators 192 may also include a secondary turbulators 110 interconnecting adjacent elongated turbulators 192. In one example, the secondary turbulators 110 and the elongated turbulators 192 are arranged in a cross-hatched pattern. The secondary turbulators 110 extend a height from the wall 186 that is less than the height of the elongated turbulators 192 in the example shown.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although example embodiments have been disclosed, a worker of ordinary skill in this art would recognize that certain modifications would come within the scope of the claims. For that and other reasons, the following claims should be studied to determine their true scope and content.

## Claims

1. A gas turbine engine component (64) comprising:
spaced apart walls (86, 88) extending in a load direction and providing a cooling passage (90), the cooling passage (90) providing a tortuous passage having a generally straight portion (105) extending in the load direction and a bend (106) transverse to the load direction; and
elongated turbulators (92; 192) protruding from at least one of the walls (86, 88) and extending substantially in the load direction, the elongated turbulators (92; 192) substantially within the generally straight portion (105).

2. A gas turbine engine component (64) comprising:
spaced apart walls (86, 88) extending in a load direction and providing a cooling passage (90); and
a cluster (94) of elongated turbulators (92; 192) protruding from at least one wall (86, 88) and extending substantially in the load direction, the turbulators (92; 192) parallel to one another.

3. A gas turbine engine component (64) comprising:
spaced apart walls (86, 88) extending in a load direction and providing a cooling passage (90); and
elongated turbulators (192) protruding from at least one wall (86, 88) and extending substantially in the load direction, and a secondary turbulator (110) arranged transverse to and intersecting the elongated turbulators (92).

4. The gas turbine engine component according to any preceding claim, wherein the component (64) is a turbine blade, the spaced apart walls (86, 88) provide an airfoil (78), and the load direction is a radial direction.

5. The gas turbine engine component according to claim 4, wherein the elongated turbulators (92; 192) are arrange on both walls (86, 88).

6. The gas turbine engine component according to claim 4 or 5, wherein the walls (86, 88) are spaced apart a width, and the elongated turbulators (92; 192) have a height less than the width.

7. The gas turbine engine component according to any of claims 4 to 6, wherein the elongated turbulators (92; 192) extend in the radial direction a length and include a width, a ratio of the length to the width being at least 4:1.

8. The gas turbine engine component according to any of claims 4 to 7, wherein the airfoil (78) includes a trailing edge portion (84), the elongated turbulators (92) arranged in the trailing edge portion (84).

9. The gas turbine engine component according to any of claims 4 to 8, wherein the elongated turbulators (92; 192) are oriented at an angle relative to the radial direction within +/- 15°.
